# EUROPÄISCHE PATENTSCHRIFT

(11) **EP 4 553 348 B1**
(45) Veröffentlichungstag und Bekanntmachung des Hinweises auf die Patenterteilung: **02.12.2026**
(21) Anmeldenummer: 24209700.4
(22) Anmeldetag: 30.10.2024
(51) Int. Cl.: F16J 15/00, F16J 15/3232, F16J 15/324, F16J 15/3284

(54) **DICHTUNGSANORDNUNG MIT ERDUNGSELEMENT**
SEALING ASSEMBLY WITH GROUNDING MEMBER
ENSEMBLE D'ÉTANCHÉITÉ AVEC ÉLÉMENT DE MISE À LA TERRE

(30) Priorität: 07.11.2023 DE 102023130792
(43) Veröffentlichungstag der Anmeldung: 14.05.2025
(73) Patentinhaber: Carl Freudenberg KG, 69469 Weinheim (DE)
(72) Erfinder: Hoffner, Marc, 69234 Dielheim (DE); Hintenlang, Günter, 69518 Abtsteinach (DE); Hofmann, Jens, 68305 Mannheim (DE)

(56) Entgegenhaltungen:
- EP-A1- 4 191 097
- EP-B1- 2 924 324
- DE-A1- 102014 010 269
- DE-A1- 19 915 467
- DE-A1- 2 825 622
- US-A1- 2022 349 477

## Beschreibung

Die vorliegende Erfindung betrifft eine Dichtungsanordnung mit einem Erdungselement zur Abdichtung eines ersten Bereichs, insbesondere einer Atmosphäre, von einem zweiten, mit Öl gefüllten Produktbereich und eine elektrische Anordnung mit einer derartigen Dichtungsanordnung.

Dichtungsanordnungen sind aus dem Stand der Technik in unterschiedlichen Ausgestaltungen bekannt. Derartige Dichtungsanordnungen werden beispielsweise bei rotierenden elektrischen Maschinen mit Ölschmierung und Ölkühlung verwendet, bei denen ein Maschinengehäuse an einer Welle gegenüber der Umgebung abgedichtet werden muss. Hierbei muss die rotierende Welle elektrisch mit einem feststehenden Bauteil verbunden werden. Die EP 2 924 324 B1 zeigt z.B. einen J-förmigen, elastischen Dichtring. Dieser Dichtring ist mittels eines Schenkels zwischen einem äußeren Metallgehäuse und einem inneren Metallgehäuse angeordnet. Hierbei ist noch eine zusätzliche Dichtung zwischen dem Schenkel und dem äußeren Metallgehäuse angeordnet. Ferner zeigt die EP 2 924 324 B1 eine Spaltdichtung am äußeren Gehäuse zur Welle. Dadurch ergibt sich ein Ölraum zwischen dem J-förmigen Dichtring und dem Schenkel des äußeren Metallgehäuses. Hierbei soll insbesondere die zusätzliche Dichtung den Raum für den Ölraum vergrößern. Der Raum ist aber kein Ölfangraum, sondern ein Schmierfettreservoir, um insbesondere den zweiten Schenkel der elastischen Dichtung über seine Lebensdauer zu schmieren.

Des Weiteren schlägt beispielsweise die DE 10 2013 000 982 A1 vor, eine Dichtungsanordnung mit einem Dichtring und einer Vorschaltdichtung aus einem elektrisch leitfähigen Material vorzusehen, wobei in axialer Richtung zwischen der Vorschaltdichtung und dem Dichtring eine am rotierenden Bauteil anliegende und spaltbildende Schmutzlippe angeordnet ist. Diese Schmutzlippe hat die Aufgabe, Schmutz und Partikel davon abzuhalten, von einer Außenseite in Richtung zum Dichtbereich am Dichtring und dadurch in den ölgefüllten Bereich zu gelangen. Diese Ausgestaltung hat sich grundsätzlich bewährt, ein Problem liegt allerdings in der relativ kurzen Lebensdauer des Erdungselements. Die kurze Lebensdauer begründet sich darin, dass die Dichtung geringste Mengen Öl durchlässt, wie z.B. abdunstendes Spaltfluid. Dies wird vom Erdungselement aufgenommen und hindert die elektrische Verbindung.

Es ist daher Aufgabe, eine Dichtungsanordnung mit Erdungselement und eine elektrische Anordnung bereitzustellen, welche bei einfachem Aufbau und einfacher, kostengünstiger Herstellbarkeit eine verbesserte Funktion und Lebensdauer aufweist.

Diese Aufgabe wird durch eine Dichtungsanordnung mit den Merkmalen des Anspruchs 1 und eine elektrische Anordnung mit den Merkmalen des Anspruchs 15 gelöst, die Unteransprüche zeigen bevorzugte Weiterbildungen der Erfindung.

Die erfindungsgemäße Dichtungsanordnung zur Abdichtung eines ersten Bereichs von einem zweiten, mit Öl gefüllten Produktbereich von einem rotierenden Bauteil mit den Merkmalen des

Anspruchs 1 weist den Vorteil auf, dass ein Erdungselement eine signifikant höhere Lebensdauer als bisher im Stand der Technik aufweist. Hierbei wird das Erdungselement z.B. aus einem elektrisch leitfähigen Vliesmaterial hergestellt. Weiterhin ist in Axialrichtung zwischen einem elastischen Dichtring, welcher an einem rotierenden Bauteil, wie z.B. einer Welle, in kontaktierender Weise abdichtet und dem Erdungselement eine Spaltdichtung mit einem Spalt mit einer definierten radialen Spalthöhe vorgesehen, welche einen Schutz des Erdungselements vor einem Verölen sicherstellt und trotzdem eine definierte kleine Menge von Öl oder Ölnebel vom elastischen Dichtring in Richtung zum Erdungselement durchlässt. Die radiale Spalthöhe ist in Axialrichtung vorzugsweise konstant. Falls eine zu große Menge von Öl oder Ölnebel zum Erdungselement gelangen würde, könnten die elektrischen Eigenschaften des Erdungselements eingeschränkt werden und somit die Funktion der elektrischen Erdung des Erdungselements beeinträchtigt sein. Somit wird auf überraschende Weise Öl oder ein Ölnebel, welcher in gewissem Maße immer durch den elastischen Dichtring in Richtung zum abzudichtenden ersten Bereich gelangen kann, dazu verwendet, eine Lebensdauer des Erdungselements zu verlängern. Die Spaltdichtung stellt dabei sicher, dass nicht zu viel Öl oder Ölnebel in Richtung zum Erdungselement gelangen kann und dessen elektrisch leitende Eigenschaften negativ beeinflussen kann, jedoch eine geringfügige Kontaktschmierung mit Öl zwischen dem Erdungselement und dem rotierenden Bauteil vorhanden ist.

Dies wird erfindungsgemäß dadurch erreicht, dass die Dichtungsanordnung einen elastischen, ringförmigen Dichtring aus einem elastischen Material mit einem ersten und einem zweiten Dichtflansch aufweist, welche über einen im Wesentlichen radial verlaufenden Verbindungsbereich miteinander verbunden sind. Der Verbindungsbereich weist eine Vorderseite, die in Richtung des ölgefüllten Produktbereichs (zweiter Bereich) gerichtet ist und eine an der entgegengesetzten Seite angeordnete Rückseite auf, welche in Richtung zum ersten Bereich gerichtet ist. Das Erdungselement ist an der Rückseite des Verbindungsbereichs angeordnet und eingerichtet, das rotierende Bauteil mit einem feststehenden Gehäuseteil elektrisch zu verbinden und somit einen Potentialausgleich zu gewährleisten. Die Spaltdichtung ist in Axialrichtung zwischen dem ersten Dichtflansch, der an dem rotierenden Bauteil anliegt, und dem Erdungselement angeordnet, so dass ein erster Raum zwischen dem Dichtring und der Spaltdichtung ausgebildet ist, um einen Fangraum für Öl oder Ölnebel aus dem ölgefüllten Bereich bereitzustellen. Somit ist die Spaltdichtung eingerichtet, einen definierten radialen Spalt zum rotierenden Bauteil aufrecht zu erhalten, um austretendes Öl oder Ölnebel über den definierten Spalt vom Erdungselement im Wesentlichen fernzuhalten und nur einen geringen Teil durch den definierten Spalt zum Erdungselement zuzuführen. Die Spaltdichtung hat somit die primäre Aufgabe Öl oder Ölnebel vom Erdungselement fernzuhalten. Somit kann die Spaltdichtung ein Verölen des Erdungselements verhindern, so dass keine Funktionseinschränkungen der elektrischen Eigenschaften des Erdungselements durch Öl oder Ölnebel auftritt. Trotzdem kann am Erdungselement an einem Kontaktbereich des Erdungselements mit dem rotierenden Bauteil ein durch die Spaltdichtung definierter, kleiner Anteil von Öl vorhanden sein, welcher die elektrische Leitfähigkeit des Erdungselements nicht signifikant verringert, aber eine Reibung zwischen dem Erdungselement und dem rotierenden Bauteil im Betrieb reduzieren kann, wodurch ein Verschleiß des Erfindungselements signifikant reduziert wird.

Das Erdungselement ist vorzugsweise ein elektrisch leitfähiges Vlies oder ein elektrisch leitfähiges Element aus PTFE. Das elektrisch leitfähige Vlies weist dabei weiter bevorzugt keine aufsaugende Eigenschaft auf.

Vorzugsweise weist das Erdungselement einen im Wesentlichen C-förmigen oder umgekehrten C-förmigen Querschnitt auf. Dadurch ist es möglich, dass das Erdungselement sowohl am rotierenden Bauteil als auch am Gehäusebauteil eine große Kontaktfläche für einen elektrischen Kontakt mit diesen Bauteilen aufweist. Alternativ weist das Erdungselement einen S-förmigen oder umgekehrt S-förmigen Querschnitt auf.

Vorzugsweise umfasst die Spaltdichtung eine aus einem saugfähigen Vliesmaterial hergestellte Scheibe, an deren innerem Radius ein Spalt der Spaltdichtung ausgebildet ist. Dadurch kann die Spaltdichtung selbst Öl aufsaugen, so dass in einem Fall, in welchem zu viel Öl durch den Dichtring in Richtung zur Spaltdichtung gelangt, das Öl durch das Vliesmaterial der Spaltdichtung aufgenommen werden kann. Wenn in einem Betriebszustand wenig oder kein Öl in Richtung zur Spaltdichtung gelangt, kann das Öl auch wieder abgegeben werden. Auch kann das Öl in Richtung zum Erdungselement abgegeben werden, wenn über den Spalt der Spaltdichtung nicht ausreichend Öl zur Schmierung am Erdungselement gelangt.

Vorzugsweise ist eine radiale Spalthöhe des Spalts der Spaltdichtung in einem Bereich von 0,01 mm bis 0,50 mm, insbesondere 0,10 mm bis 0,40 mm und weiter insbesondere 0,20 mm bis 0,30 mm. Durch die Wahl der radialen Spalthöhe wird eine Zufuhr von Öl zum Erdungselement definiert. Je nach Anwendungsfall kann somit ein größerer oder ein kleinerer Spalt der Spaltdichtung vorgegeben sein, so dass immer eine ausreichende Ölmenge zur Schmierung am Erdungselement vorhanden ist, welche jedoch so gering ist, dass die elektrischen Eigenschaften des Erdungselements nicht negativ beeinflusst werden. Es sei angemerkt, dass die Spaltdichtung vorzugsweise auch derart ausgelegt werden, dass ein leichter Kontakt zwischen der Spaltdichtung und dem rotierenden Bauteil vorhanden ist, da im Betrieb aufgrund von Exzentrizitäten auch bei einer derartigen Auslegung sich immer ein kleiner Radialspalt ergibt, welcher zwischen der Spaltdichtung und dem rotierenden Bauteil vorhanden ist.

Vorzugsweise ist die Spaltdichtung zwischen dem Erdungselement und der Rückseite des Verbindungsbereichs fixiert.

Eine besonders einfache und kostengünstige Fixierung des Erdungselements am Dichtring erfolgt mittels einer Klebeverbindung und/oder einer formschlüssigen Verbindung. Falls ausschließlich eine formschlüssige Verbindung verwendet wird, ist vorteilhaft, dass das Erdungselement auf einfache Weise vom Dichtring getrennt werden kann.

Um eine besonders sichere Fixierung des Erdungselements zu ermöglichen, umfasst die Dichtungsanordnung weiter bevorzugt ein elektrisch leitfähiges Metallblech, mit welchem das Erdungselement am Dichtring fixiert wird.

Gemäß einer alternativen Ausgestaltung der Erfindung umfasst die Spaltdichtung einen Elastomerring. Vorzugsweise sind der Elastomerring der Spaltdichtung und der Dichtring aus dem gleichen Material und einstückig hergestellt.

Gemäß einer weiteren bevorzugten Ausgestaltung der Erfindung umfasst die Spaltdichtung ein Blechteil, wobei der Spalt zwischen der Spaltdichtung und dem rotierenden Bauteil an einem Innenumfang des Blechteils ausgebildet ist. Das Blechteil kann auf einfache Weise durch Umformen aus einem Flachmaterial hergestellt werden. Das Blechteil weist weiter bevorzugt eine vom Spalt abgewandte Fangrinne auf, in welcher Schmutzteilchen oder Partikel oder dgl. aufgefangen werden können und somit nicht zum Erdungselement gelangen können und die elektrische Leitfähigkeit stark verringern können.

Weiter bevorzugt ist das Blechteil im Querschnitt L-förmig. Daraus resultiert ein langer Spalt der Spaltdichtung in Axialrichtung.

Gemäß einer weiteren bevorzugten Ausgestaltung der Erfindung ist am Dichtring ferner eine zusätzliche Schutzlippe ausgebildet, welche in Axialrichtung zwischen dem Dichtkontakt des Dichtrings mit dem rotierenden Bauteil und der Spaltdichtung angeordnet ist. Durch die Schutzlippe wird ein weiterer Fangraum zwischen der Schutzlippe und der Spaltdichtung gebildet, in welchem Öl aufgenommen werden kann, welches über den Dichtkontakt zum rotierenden Bauteil in den Fangraum gelangen kann und somit ein weiterer Schutz des Erdungselements vor einem Verölen ermöglicht wird. Die Schutzlippe weist dabei einen weiteren Spalt zum rotierenden Bauteil auf, welcher in definierter Weise ein Durchlassen von Öl von dem zusätzlich gebildeten Fangraum zum ersten Raum, welcher nun zwischen der Schutzlippe und der Spaltdichtung vorhanden ist, zulässt. Der Spalt an der Spaltdichtung ist vorzugsweise kleiner als der weitere Spalt an der Schutzlippe. Die Schutzlippe ist vorzugsweise einstückig und aus dem gleichen Material wie der Dichtring gebildet. Vorzugsweise wird die Schutzlippe gleichzeitig mit der Herstellung des Dichtrings aus einem Elastomermaterial hergestellt.

Vorzugsweise ist der Dichtring aus einem elektrisch nichtleitenden Material hergestellt.

Weiterhin betrifft die vorliegende Erfindung eine elektrische Anordnung mit einer erfindungsgemäßen Dichtungsanordnung zum Erden eines rotierenden Bauteils an einem Gehäusebauteil.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Dichtungsanordnung gemäß einem ersten Ausführungsbeispiel der Erfindung,
- Fig. 2: eine schematische Schnittansicht einer Dichtungsanordnung gemäß einem zweiten Ausführungsbeispiel der Erfindung,
- Fig. 3: eine schematische Schnittansicht einer Dichtungsanordnung gemäß einem dritten Ausführungsbeispiel der Erfindung,
- Fig. 4: eine schematische Schnittansicht einer Dichtungsanordnung gemäß einem vierten Ausführungsbeispiel der Erfindung,
- Fig. 5: eine schematische Schnittansicht einer Dichtungsanordnung gemäß einem fünften Ausführungsbeispiel der Erfindung,
- Fig. 6: eine schematische Schnittansicht einer Dichtungsanordnung gemäß einem sechsten Ausführungsbeispiel der Erfindung,
- Fig. 7: eine schematische Schnittansicht einer Dichtungsanordnung gemäß einem siebten Ausführungsbeispiel der Erfindung, und
- Fig. 8: eine schematische Schnittansicht einer Dichtungsanordnung gemäß einem achten Ausführungsbeispiel der Erfindung.

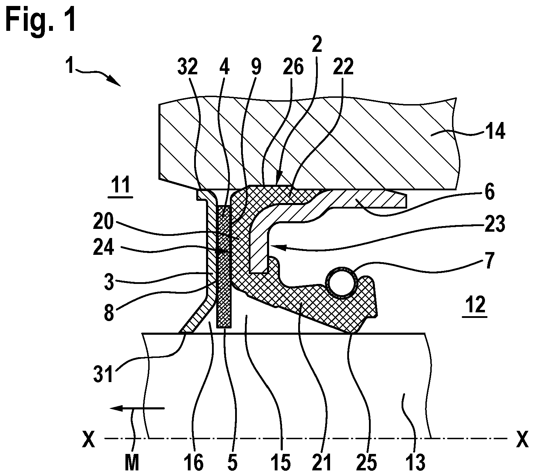

Nachfolgend wird unter Bezugnahme auf die Fig. 1 eine Dichtungsanordnung 1 gemäß einem ersten bevorzugten Ausführungsbeispiel der Erfindung im Detail beschrieben.

Wie aus Fig. 1 ersichtlich ist, umfasst die Dichtungsanordnung 1 einen Dichtring 2 aus einem elastischen Material, vorzugsweise einem Elastomer.

Der Dichtring 2 weist einen im Wesentlichen C-förmigen Querschnitt mit einem ersten Dichtflansch 21 und einem zweiten Dichtflansch 22 auf. Der erste Dichtflansch 21 wird über einen im Wesentlichen radial verlaufenden Verbindungsbereich 20 mit dem zweiten Dichtflansch 22 verbunden.

Die Dichtungsanordnung 1 dichtet einen ersten Bereich 11, z.B. einen Atmosphärenbereich, von einem zweiten, ölgefüllten Bereich 12 ab. Der zweite ölgefüllte Bereich 12 ist beispielsweise ein ölgefüllter Raum einer elektrischen Maschine, wobei das Öl als Kühlungsmedium für die Bauteile der elektrischen Maschine dient.

Der erste Dichtflansch 21 und der zweite Dichtflansch 22 sind in Richtung einer Vorderseite 23 des Dichtrings 2 gerichtet. Dabei dichtet der Dichtring 2 an einem ersten Dichtkontakt 25 an einem rotierenden Bauteil 13, insbesondere einer Welle, ab.

Ein zweiter Dichtkontakt 26 dichtet an einem stationären Gehäusebauteil 14 ab.

Der Dichtring 2 weist zur Versteifung ein Versteifungsblech 6 auf, welches insbesondere eine Versteifung des zweiten Dichtflansches 22 ermöglicht. Eine Ringfeder 7 dient als Vorspannmittel zum Vorspannen des zweiten Dichtflansches 22, um eine sichere Abdichtung am ersten Dichtkontakt 25 zu erhalten.

Die Dichtungsanordnung 1 umfasst ferner ein Erdungselement 3 zur elektrischen Erdung. Das Erdungselement 3 ist ein aus einem elektrisch leitfähigen Vliesmaterial hergestelltes Bauteil. Das Erdungselement 3 ist an einer Rückseite 24 des Verbindungsbereichs 20 angeordnet und befindet sich an einem radial inneren Ende mit dem rotierenden Bauteil 13 in Kontakt und an einem radial äußeren Ende mit dem stationären Gehäusebauteil 14 in Kontakt.

Wie aus Fig. 1 ersichtlich ist, ist das Erdungselement 3 mit einem im Wesentlichen umgekehrten C-förmigen Querschnitt ausgebildet. An einem Kontakt 31 zum rotierenden Bauteil bildet das Erdungselement 3 eine Art Lippe. An einem Kontakt 32 zum stationären Gehäusebauteil 14 bildet das Erdungselement 3 eine flächige Kontaktierung des Gehäusebauteils oder alternativ eine linienförmige Kontaktierung.

In Axialrichtung X-X zwischen dem Erdungselement 3 und dem ersten Dichtkontakt 25 des Dichtrings 2 am rotierenden Bauteil 13 ist eine Spaltdichtung 4 angeordnet. Die Spaltdichtung 4 ist vorzugsweise aus einem saugfähigen Vliesstoff hergestellt. Der saugfähige Vliesstoff muss dabei nicht elektrisch leitend sein.

Die Spaltdichtung 4 weist eine Ringform auf und ist derart am Dichtring 2 fixiert, dass ein radialer Spalt 5 zwischen einem radial inneren Ende der Spaltdichtung 4 und dem rotierenden Bauteil 13 vorhanden ist. Eine Spalthöhe des Spalts 5 kann dabei durch die Wahl eines Innendurchmessers der Spaltdichtung 4 definiert eingestellt werden.

Zwischen dem Erdungselement 3 und der Spaltdichtung 4 ist eine erste Klebeverbindung 8 ausgebildet, so dass das Erdungselement 3 auf die Spaltdichtung 4 aufgeklebt ist. Zwischen der Spaltdichtung 4 und dem Dichtring 2 ist eine zweite Klebeverbindung 9 vorgesehen, so dass die ringförmige Spaltdichtung 4 auf den Verbindungsbereich 20 des Dichtrings 2 aufgeklebt ist.

Wie aus Fig. 1 ersichtlich ist, unterteilt die Spaltdichtung 4 einen Bereich am rotierenden Bauteil 13 in einen ersten Raum 15 zwischen dem Dichtring 2 und der Spaltdichtung sowie einen zweiten Raum 16 zwischen der Spaltdichtung 4 und dem Erdungselement 3.

Der erste Raum 15 dient nun als Fangraum für Öl oder Ölnebel, welcher über den ersten Dichtkontakt 25 in Richtung zur Spaltdichtung 4 gelangen kann. Dadurch wird Öl oder Ölnebel vom Erdungselement 3 abgehalten, so dass ein Verölen des Erdungselements 3 vermieden werden kann und das Erdungselement 3 seine elektrischen Eigenschaften, insbesondere seine elektrische Leitfähigkeit, beibehält.

Die Spaltdichtung 4 ist nun eingerichtet, den Spalt 5 zum rotierenden Bauteil 13 aufrecht zu erhalten, um auch Öl oder Ölnebel, welche über den ersten Dichtkontakt 25 in einen ersten Raum 15 zwischen dem Dichtring 2 und der Spaltdichtung 4 gelangen können, in definierter Weise zum Erdungselement 3 zuführen zu können. Insbesondere kann eine zugeführte Menge durch Wahl der Höhe des Spalts 5 definiert werden. Hierdurch kann dem tribologischen Kontakt zwischen Erdungselement 3 und rotierendem Bauteil 13 in gewissem Umfang Öl bereitgestellt werden, so dass eine Reibung zwischen dem Erdungselement 3 und dem rotierenden Bauteil 13 auf ein Minimum reduziert ist. Die von der Spaltdichtung durchgelassene Ölmenge ist dabei derart gering, dass die elektrischen Kontakteigenschaften des Erdungselements 3 in Bezug auf das rotierende Bauteil 13 nicht beeinträchtigt werden.

Da die Spaltdichtung 4 aus einem saugfähigen Vliesstoff hergestellt ist, können überschüssige Ölmengen, welche in einen ersten Raum 15 gelangt sind und bei denen die Gefahr besteht, dass diese über den Spalt 5 in einen zweiten Raum 16 gelangen könnten, durch die Spaltdichtung 4 aufgenommen werden.

Falls im Betrieb wieder eine Betriebssituation herrscht, in welcher Öl aus dem ersten Raum 15 über den Dichtring 2 wieder in den zweiten, ölgefüllten Bereich 12 zurückgefördert wird, kann auch die Spaltdichtung 4 wieder Öl abgeben und dieses Öl über den ersten Dichtkontakt 25 in den zweiten Bereich 12 gefördert werden.

Abhängig von den jeweiligen Betriebssituationen sei angemerkt, dass der Dichtring 2 im Betrieb eigentlich eine sichere Abdichtung am rotierenden Bauteil 13 bereitstellen kann, so dass kein sichtbares Öl über den ersten Dichtkontakt 25 in den ersten Raum 15 gelangen kann.

Allerdings gibt es im Betrieb auch eine Form von unkontrolliert abdunstendem Spaltfluid (Ölnebel), welches über den ersten Dichtkontakt 25 in den ersten Raum 15 gelangen kann. Diese im Betrieb häufig nicht sichtbare Leckage beeinflusst jedoch aufgrund der elektrisch isolierenden Eigenschaft von Öl sowie Ablagerungen von Ölbestandteilen im tribologischen Reibkontakt auf dem dynamisch kontaktierten, rotierenden Bauteil die elektrische Verbindung zwischen dem Erdungselement 3 und dem rotierenden Bauteil 13, falls zu viel abgedunstetes Öl zum Erdungselement 3 gelangen kann.

Die Erfindung kann nun durch das Vorsehen der Spaltdichtung 4 mit definiertem Spalt 5 sicherstellen, dass nur eine für die elektrischen Eigenschaften des Erdungselements 3 unschädliche Ölmenge zum Erdungselement 3 gelangen kann. Das Öl am Erdungselement 3, welches in definierter Menge dem Erdungselement 3 zugeführt wird, stellt auch eine reduzierte Reibung zwischen dem Erdungselement 3 und dem rotierenden Bauteil 13 bereit, so dass eine Lebensdauer des Erdungselements 3 signifikant verlängert werden kann.

Falls zu viel abgedunstetes Öl über den ersten Dichtkontakt 25 gelangen kann, dient die Spaltdichtung 4 als Sicherheitselement, welches zusätzlich überschüssiges Öl bzw. überschüssigen Ölnebel aufnehmen kann. Somit weist die Spaltdichtung 4 neben der hauptsächlichen Schutzfunktion des Erdungselements 3 auch noch eine Funktion einer definierten Zufuhr von Öl zum Erdungselement 3 auf. Somit kann eine Art Schmierstoffdosierung erreicht werden, so dass gerade so viel Öl zum Erdungselement 3 zugeführt wird, dass kein übermäßiger Verschleiß im Betrieb am Erdungselement 3 am Kontakt 31 auftritt.

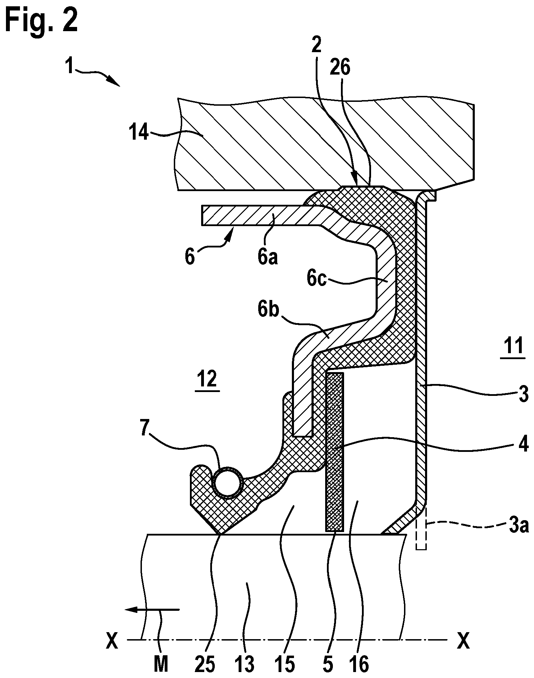

Nachfolgend werden unter Bezugnahme auf die Fig. 2 bis 8 weitere bevorzugte Ausführungsbeispiele der Erfindung beschrieben, wobei gleiche Teile mit den gleichen Bezugszeichen bezeichnet sind.

Fig. 2 zeigt ein zweites Ausführungsbeispiel einer Dichtungsanordnung 1. Im Unterschied zum ersten Ausführungsbeispiel ist beim zweiten Ausführungsbeispiel durch die geometrische Form des Versteifungsblechs 6 ein relativ großer erster und zweiter Raum 15, 16 gebildet, um größere Ölmengen aufzunehmen. Wie aus Fig. 2 ersichtlich ist, weist das Versteifungsblech 6 einen ersten Schenkel 6a, einen zweiten Schenkel 6b und einen Bodenbereich 6c auf. Hierdurch wird ein zusätzlicher Raum radial innerhalb des Dichtrings 2 erhalten, so dass der erste und zweite Raum 15, 16 mit jeweils großem Volumen ausgebildet sein können. Wie weiter aus Fig. 2 ersichtlich ist, ist die Spaltdichtung 4 radial innerhalb der beiden Schenkel 6a, 6b des Versteifungsblechs angeordnet. Die Spaltdichtung ist aus einem saugfähigen Vliesmaterial hergestellt. Das Erdungselement 3 ist ebenfalls aus einem Vlies hergestellt, allerdings aus einem elektrisch leitfähigen Vliesmaterial ohne übermäßige Aufsaugfunktion, so dass nicht zuviel Öl durch das Vlies des Erdungselements 3 aufgesaugt werden kann. In Fig. 2 ist in gestrichelter Weise auch ein radialer Endbereich 3a dargestellt. Bei einer Montage wird, wie in Fig. 2 gezeigt, die Welle 13 in Richtung der Montagerichtung M aufgeschoben, so dass sich der radiale Endbereich 3a des Erdungselements entsprechend verformt. Dadurch steht insbesondere der radiale Endbereich 3a des Erdungselements nicht in Richtung des ersten Bereichs 11 vor.

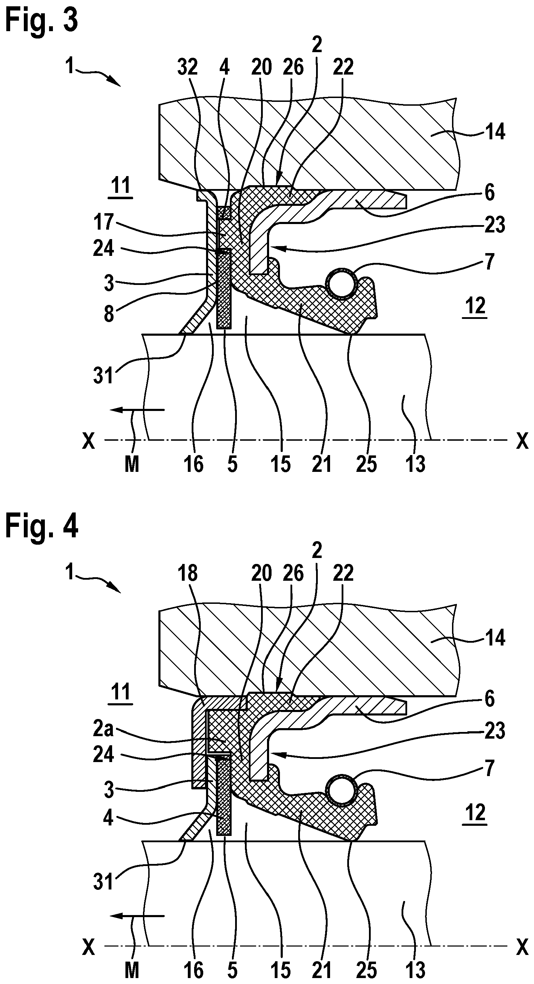

Bei dem in Fig. 3 gezeigten dritten Ausführungsbeispiel ist zwischen der Spaltdichtung 4 und dem Dichtring 2 eine formschlüssige Verbindung 17 vorgesehen. Hierbei weist der Dichtring 2 einen vorzugsweise mit einer Hinterschneidung ausgebildeten vorstehenden Ring auf, an welchem die Spaltdichtung 4 formschlüssig fixiert und zentrisch ausgerichtet ist. Statt eines umlaufenden Rings können auch mehrere einzelne knopfartige Vorsprünge am Dichtring 2 vorgesehen sein. Das Erdungselement 3 ist dann wieder an der Spaltdichtung 4 mittels der ersten Klebeverbindung 8 fixiert.

Fig. 4 zeigt eine Dichtungsanordnung 1 gemäß einem vierten Ausführungsbeispiel der Erfindung. Ähnlich wie beim dritten Ausführungsbeispiel ist am Dichtring 2 eine Aufdickung 2a an dessen Rückseite 24 vorgesehen, wobei die Aufdickung 2a in radialer Richtung das Erdungselement 3 und die Spaltdichtung 4 überdeckt. Zur Fixierung des Erdungselements 3 ist ein Metallblech 18 vorgesehen, welches das Erdungselement 3 und die Spaltdichtung 4 am Dichtring 2 fixiert. Dies kann zusätzlich auch noch durch Klebeverbindungen verstärkt werden. Das Metallblech 18 stellt dabei die elektrische Verbindung zwischen dem Erdungselement 3 und dem stationären Gehäusebauteil 14 bereit. Dieses Ausführungsbeispiel benötigt insbesondere weniger Vliesmaterial für das Erdungselement 3 und die Spaltdichtung 4.

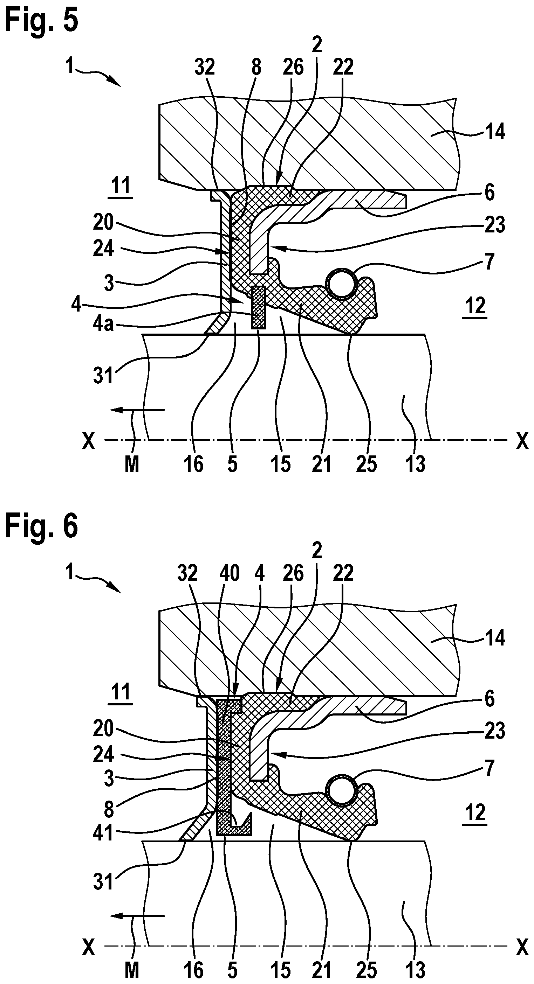

Beim in Fig. 5 gezeigten fünften Ausführungsbeispiel umfasst die Spaltdichtung 4 einen Elastomerring 4a, welcher den Spalt 5 zwischen der Spaltdichtung 4 und dem rotierenden Bauteil 13 definiert. Der Elastomerring 4a kann ein separates Bauteil sein und am Dichtring 2 fixiert sein oder alternativ ist der Elastomerring 4a einteilig mit dem Dichtring 2 ausgebildet.

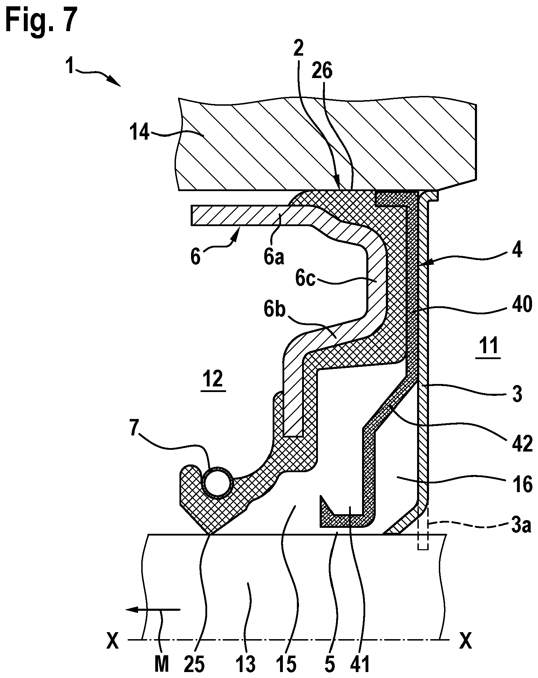

Die Fig. 6 und 7 zeigen ein sechstes und siebtes Ausführungsbeispiel der Erfindung, bei denen die Spaltdichtung 4 ein Blechteil 40 umfasst. Wie aus Fig. 6 ersichtlich ist, weist das Blechteil 40 im Wesentlichen eine L-Form auf und stellt eine Fangrinne 41 bereit. Hierdurch kann sich Öl oder Ölnebel in der Fangrinne 41 fangen und zurückgehalten werden und nicht zum Erdungselement 3 gelangen. Das Blechteil 40 ist vorzugsweise über eine Klebeverbindung mit dem Dichtring 2 und dem Erdungselement 3 verbunden.

Das in Fig. 7 gezeigte siebte Ausführungsbeispiel entspricht im Wesentlichen dem sechsten Ausführungsbeispiel, wobei das Blechteil 40 noch eine Abwinkelung 42 aufweist. Dadurch kann auf einfache Weise ein Volumen des ersten Raums 15 und des zweiten Raums 16 je nach Anwendungsfall eingestellt werden (vgl. Fig. 7).

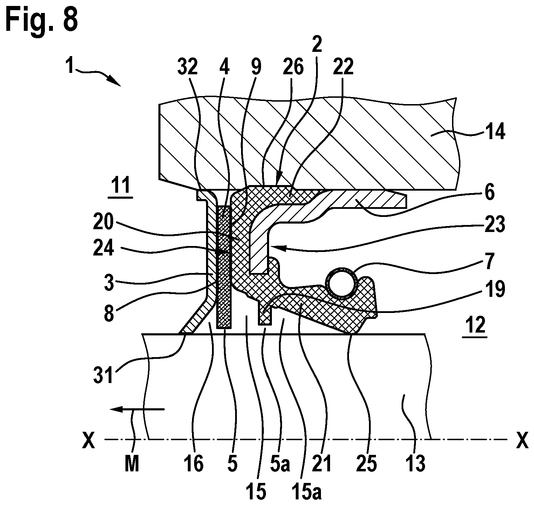

Fig. 8 zeigt ein achtes Ausführungsbeispiel einer Dichtungsanordnung, welches im Wesentlichen dem ersten Ausführungsbeispiel entspricht. Im Unterschied zum ersten Ausführungsbeispiel ist beim achten Ausführungsbeispiel zusätzlich eine Schutzlippe 19 vorgesehen. Die Schutzlippe 19 ist am Dichtring 2 angeordnet und bildet mit dem rotierenden Bauteil einen weiteren Spalt 5a. Wie unmittelbar aus Fig. 8 ersichtlich ist, wird durch das Vorsehen der Schutzlippe 19 ein weiterer Fangraum 15a für Öl oder Ölnebel ausgebildet. Dadurch sind insgesamt drei Räume in Reihe ausgehend vom ersten Dichtkontakt 25 bis zum Erdungselement 3 vorhanden. Der weitere Fangraum 15a ist in Axialrichtung zwischen dem ersten Dichtkontakt 25 und der Schutzlippe 19 vorgesehen. Der erste Raum 15 ist in Axialrichtung zwischen der Schutzlippe 19 und der Spaltdichtung 4 ausgebildet. Der zweite Raum 16 ist in Axialrichtung zwischen der Spaltdichtung 4 und dem Erdungselement 3 ausgebildet.

Eine radiale Spalthöhe des weiteren Spalts 5a in der Schutzlippe 19 ist dabei größer als eine radiale Spalthöhe des Spalts 5 an der Spaltdichtung 4. Somit sind bei dem in Fig. 8 gezeigten Ausführungsbeispiel zwei Spaltdichtungen in Reihe am rotierenden Bauteil angeordnet. Hierdurch ergibt sich eine signifikante Wirkverbesserung einer Zurückhaltung von Öl und Ölnebel in Richtung zum Erdungselement. Die Schutzlippe 19 ist materialgleich mit dem Dichtring 2 und vorzugsweise einstückig mit diesem ausgebildet. Dadurch wird ein weiterer verbesserter Schutz des Erdungselements 3 vor einem Verölen erreicht, ohne dass die Herstellkosten für den Dichtring 2 signifikant steigen.

## Patentansprüche

1. Dichtungsanordnung zur Abdichtung eines ersten Bereichs (11) von einem zweiten, ölgefüllten Bereich (12) an einem rotierenden Bauteil (13), umfassend:
- einen Dichtring (2) aus einem elastischen Material mit einem ersten Dichtflansch (21), einem zweiten Dichtflansch (22) und einem Verbindungsbereich (20), wobei der Verbindungsbereich den ersten Dichtflansch (21) mit dem zweiten Dichtflansch (22) verbindet und eine zum zweiten Bereich (12) gerichtete Vorderseite (23) aufweist,
- ein Erdungselement (3), welches an einer Rückseite (24) des Verbindungsbereichs (20) angeordnet ist und eingerichtet ist, das rotierende Bauteil (13) elektrisch mit einem stationären Gehäusebauteil (14) zu verbinden, und
- eine Spaltdichtung (4), welche in Axialrichtung (X-X) zwischen einem Dichtkontakt (25) des ersten Dichtflansches (21) am rotierenden Bauteil (13) und dem Erdungselement (3) angeordnet ist, so dass ein erster Raum (15) zwischen dem Dichtring (2) und der Spaltdichtung (4) ausgebildet ist, um einen Fangraum für Öl oder Ölnebel aus dem ölgefüllten Bereich (12) bereitzustellen,
- wobei die Spaltdichtung (4) eingerichtet ist, einen Spalt (5) zum rotierenden Bauteil (13) derart aufrecht zu erhalten, um einerseits einen Schutz des Erdungselements von einem Verölen sicherzustellen und andererseits um Öl oder Ölnebel zum Erdungselement (3) in definierter Weise in Abhängigkeit einer Spalthöhe des Spalts (5) zuzuführen, um eine Kontaktschmierung zwischen dem Erdungselement (3) und dem rotierenden Bauteil (13) ohne Funktionseinschränkung der elektrischen Eigenschaften des Erdungselements (3) zu ermöglichen.

2. Dichtungsanordnung nach Anspruch 1, wobei das Erdungselement (3) einen im Wesentlichen C-förmigen Querschnitt oder umgekehrten C-förmigen Querschnitt aufweist.

3. Dichtungsanordnung nach einem der vorhergehenden Ansprüche, wobei die Spaltdichtung (4) eine aus einem saugfähigen Vliesstoff hergestellte Scheibe umfasst, an deren innerem Radius der Spalt (5) ausgebildet ist.

4. Dichtungsanordnung nach einem der vorhergehenden Ansprüche, wobei eine in Radialrichtung vorhandene Überdeckung (10) zwischen dem Erdungselement (3) und der Spaltdichtung (4) am inneren Umfang des Erdungselements (3) ausgebildet ist.

5. Dichtungsanordnung nach einem der vorhergehenden Ansprüche, wobei eine radiale Spalthöhe des Spalts (5) in einem Bereich von 0,01 mm bis 0,50 mm liegt.

6. Dichtungsanordnung nach einem der vorhergehenden Ansprüche, wobei die Spaltdichtung (4) zwischen dem Erdungselement (3) und der Rückseite (24) des Verbindungsbereichs (20) fixiert ist.

7. Dichtungsanordnung nach einem der vorhergehenden Ansprüche, wobei eine Klebeverbindung und/oder eine formschlüssige Verbindung zwischen dem Erdungselement (3) und der Spaltdichtung (4) und/oder zwischen der Spaltdichtung (4) und dem Dichtring (2) ausgebildet ist.

8. Dichtungsanordnung nach einem der vorhergehenden Ansprüche, ferner umfassend ein Metallblech (18) zur Fixierung des Erdungselements (3) am Dichtring (2).

9. Dichtungsanordnung nach einem der vorhergehenden Ansprüche, wobei die Spaltdichtung (4) einen Elastomerring (4a) umfasst, welcher einstückig mit dem Dichtring (2) oder als separates Bauteil am Dichtring (2) fixiert ist.

10. Dichtungsanordnung nach einem der vorhergehenden Ansprüche, wobei die Spaltdichtung (4) ferner ein Blechteil (40) umfasst, wobei der Spalt (5) zum rotierenden Bauteil (13) an einem Innenumfang des Blechteils (40) ausgebildet ist.

11. Dichtungsanordnung nach Anspruch 10, wobei das Blechteil (40) eine Fangrinne (41) aufweist und/oder wobei das Blechteil im Schnitt L-förmig ist.

12. Dichtungsanordnung nach einem der vorherigen Ansprüche, wobei am Dichtring (2) eine Schutzlippe (19) ausgebildet ist, welche in Axialrichtung (X-X) zwischen dem Dichtkontakt (25) und der Spaltdichtung (4) angeordnet ist, so dass ein weiterer Fangraum (15a) zwischen der Schutzlippe (19) und der Spaltdichtung gebildet ist, wobei ein weiterer Spalt (5a) zwischen der Schutzlippe (19) und dem rotierenden Bauteil vorhanden ist.

13. Dichtungsanordnung nach einem der vorhergehenden Ansprüche, wobei der Spalt (5) an der Spaltdichtung (4) kleiner ist als der weitere Spalt (5a) an der Schutzlippe (19).

14. Dichtungsanordnung nach einem der vorhergehenden Ansprüche, wobei der Dichtring (2) aus einem elektrisch nichtleitenden Material hergestellt ist.

15. Elektrische Anordnung, insbesondere ölgekühlte elektrische Maschine, umfassend eine Dichtungsanordnung nach einem der vorhergehenden Ansprüche.

## Claims

1. Seal arrangement for sealing off a first region (11) from a second, oil-filled region (12) at a rotating component (13), comprising:
- a sealing ring (2) made of an elastic material that has a first sealing flange (21), has a second sealing flange (22) and has a connecting region (20), wherein the connecting region connects the first sealing flange (21) to the second sealing flange (22) and has a front side (23) which is directed towards the second region (12),
- an earthing element (3) which is arranged on a rear side (24) of the connecting region (20) and is configured to electrically connect the rotating component (13) to a stationary housing component (14), and
- a gap seal (4) which is arranged between a sealing contact (25) of the first sealing flange (21) at the rotating component (13) and the earthing element (3) in an axial direction (X-X) so that a first space (15) is formed between the sealing ring (2) and the gap seal (4) so as to provide a collecting space for oil or oil mist from the oil-filled region (12),
- wherein the gap seal (4) is configured to maintain a gap (5) in relation to the rotating component (13) in such a way as to ensure protection of the earthing element from oiling, on the one hand, and to supply oil or oil mist to the earthing element (3) in a defined manner, according to a gap height of the gap (5), in order to allow contact lubrication between the earthing element (3) and the rotating component (13) without limiting the function of the electrical properties of the earthing element (3), on the other hand.

2. Seal arrangement according to Claim 1, wherein the earthing element (3) has a substantially C-shaped cross section or reverse-C-shaped cross section.

3. Seal arrangement according to one of the preceding claims, wherein the gap seal (4) comprises a disc which is produced from an absorbent non-woven material and at whose inner radius the gap (5) is formed.

4. Seal arrangement according to one of the preceding claims, wherein an overlap (10), provided in a radial direction, between the earthing element (3) and the gap seal (4) is formed at the inner circumference of the earthing element (3).

5. Seal arrangement according to one of the preceding claims, wherein a radial gap height of the gap (5) is in a range of 0.01 mm to 0.50 mm.

6. Seal arrangement according to one of the preceding claims, wherein the gap seal (4) is fixed between the earthing element (3) and the rear side (24) of the connecting region (20).

7. Seal arrangement according to one of the preceding claims, wherein an adhesive connection and/or a form-fitting connection is formed between the earthing element (3) and the gap seal (4) and/or between the gap seal (4) and the sealing ring (2).

8. Seal arrangement according to one of the preceding claims, further comprising a metal sheet (18) for fixing the earthing element (3) to the sealing ring (2).

9. Seal arrangement according to one of the preceding claims, wherein the gap seal (4) comprises an elastomer ring (4a) which is fixed in one piece with the sealing ring (2) or as a separate component to the sealing ring (2).

10. Seal arrangement according to one of the preceding claims, wherein the gap seal (4) further comprises a sheet-metal part (40), wherein the gap (5) in relation to the rotating component (13) is formed at an inner circumference of the sheet-metal part (40).

11. Seal arrangement according to Claim 10, wherein the sheet-metal part (40) has a collecting channel (41), and/or wherein the sheet-metal part is L-shaped in section.

12. Seal arrangement according to one of the preceding claims, wherein a protective lip (19) is formed on the sealing ring (2) and is arranged between the sealing contact (25) and the gap seal (4) in the axial direction (X-X) so that a further collecting space (15a) is formed between the protective lip (19) and the gap seal, wherein a further gap (5a) is provided between the protective lip (19) and the rotating component.

13. Seal arrangement according to one of the preceding claims, wherein the gap (5) at the gap seal (4) is smaller than the further gap (5a) at the protective lip (19).

14. Seal arrangement according to one of the preceding claims, wherein the sealing ring (2) is produced from an electrically non-conductive material.

15. Electrical arrangement, in particular an oil-cooled electric machine, comprising a seal arrangement according to one of the preceding claims.

## Revendications

1. Ensemble d'étanchéité destiné à étanchéifier une première zone (11) d'une seconde zone (12) remplie d'huile sur un composant rotatif (13), comprenant :
- une bague d'étanchéité (2) composée d'un matériau élastique avec une première bride d'étanchéité (21), une deuxième bride d'étanchéité (22) et une zone de liaison (20), la zone de liaison reliant la première bride d'étanchéité (21) à la deuxième bride d'étanchéité (22) et comportant un côté avant (23) dirigé vers la seconde zone (12),
- un élément de mise à la terre (3), qui est disposé sur un côté arrière (24) de la zone de liaison (20) et qui est mis au point pour relier électriquement le composant rotatif (13) à un composant fixe de boîtier (14), et
- un joint d'étanchéité de fente (4), qui est disposé dans la direction axiale (X-X) entre un contact d'étanchéité (25) de la première bride d'étanchéité (21) sur le composant rotatif (13) et l'élément de mise à la terre (3), de telle sorte qu'un premier espace (15) est formé entre la bague d'étanchéité (2) et le joint d'étanchéité de fente (4) pour fournir un espace de récupération pour l'huile ou le brouillard d'huile provenant de la zone remplie d'huile (12),
- le joint d'étanchéité de fente (4) étant mis au point pour maintenir une fente (5) par rapport au composant rotatif (13) de manière à assurer, d'une part, une protection de l'élément de mise à la terre contre en encrassement et à amener, d'autre part, de l'huile ou du brouillard d'huile à l'élément de mise à la terre (3) de manière définie en fonction d'une hauteur de fente de la fente (5) pour permettre une lubrification de contact entre l'élément de mise à la terre (3) et le composant rotatif (13) sans limitation fonctionnelle des propriétés électriques de l'élément de mise à la terre (3).

2. Ensemble d'étanchéité selon la revendication 1, l'élément de mise à la terre (3) comportant une section transversale sensiblement en forme de C ou une section transversale en forme de C inversé.

3. Ensemble d'étanchéité selon l'une des revendications précédentes, le joint d'étanchéité de fente (4) comprenant un disque fabriqué à partir d'un non-tissé absorbant, sur le rayon intérieur duquel la fente (5) est formée.

4. Ensemble d'étanchéité selon l'une des revendications précédentes, un recouvrement (10) existant dans la direction radiale entre l'élément de mise à la terre (3) et le joint d'étanchéité de fente (4) étant formé sur la périphérie intérieure de l'élément de mise à la terre (3).

5. Ensemble d'étanchéité selon l'une des revendications précédentes, une hauteur de fente radiale de la fente (5) se situant dans une plage de 0,01 mm à 0,50 mm.

6. Ensemble d'étanchéité selon l'une des revendications précédentes, le joint d'étanchéité de fente (4) étant fixé entre l'élément de mise à la terre (3) et le côté arrière (24) de la zone de liaison (20).

7. Ensemble d'étanchéité selon l'une des revendications précédentes, une liaison adhésive et/ou une liaison à complémentarité de forme étant formée entre l'élément de mise à la terre (3) et le joint d'étanchéité de fente (4) et/ou entre le joint d'étanchéité de fente (4) et la bague d'étanchéité (2).

8. Ensemble d'étanchéité selon l'une des revendications précédentes, comprenant en outre une tôle métallique (18) pour la fixation de l'élément de mise à la terre (3) sur la bague d'étanchéité (2).

9. Ensemble d'étanchéité selon l'une des revendications précédentes, le joint d'étanchéité de fente (4) comprenant une bague élastomère (4a) qui est fixée d'un seul tenant sur la bague d'étanchéité (2) ou comme un composant séparé sur la bague d'étanchéité (2).

10. Ensemble d'étanchéité selon l'une des revendications précédentes, le joint d'étanchéité de fente (4) comprenant en outre une pièce en tôle (40), la fente (5) par rapport au composant rotatif (13) étant formée sur une périphérie intérieure de la pièce en tôle (40).

11. Ensemble d'étanchéité selon la revendication 10, la pièce en tôle (40) comportant une goulotte de récupération (41) et/ou la pièce en tôle étant en forme de L en coupe.

12. Ensemble d'étanchéité selon l'une des revendications précédentes, une lèvre de protection (19) étant formée sur la bague d'étanchéité (2), laquelle est disposée dans la direction axiale (X-X) entre le contact d'étanchéité (25) et le joint d'étanchéité de fente (4), de telle sorte qu'un autre espace de récupération (15a) est formé entre la lèvre de protection (19) et le joint d'étanchéité de fente, une autre fente (5a) étant présente entre la lèvre de protection (19) et le composant rotatif.

13. Ensemble d'étanchéité selon l'une des revendications précédentes, la fente (5) sur le joint d'étanchéité de fente (4) étant plus petite que la fente supplémentaire (5a) sur la lèvre de protection (19).

14. Ensemble d'étanchéité selon l'une des revendications précédentes, la bague d'étanchéité (2) étant fabriquée à partir d'un matériau non conducteur électriquement.

15. Ensemble électrique, en particulier machine électrique refroidie à l'huile, comprenant un ensemble d'étanchéité selon l'une des revendications précédentes.
